# EUROPÄISCHE PATENTSCHRIFT

(11) **EP 1 673 206 B1**
(45) Veröffentlichungstag und Bekanntmachung des Hinweises auf die Patenterteilung: **03.06.2009**
(21) Anmeldenummer: 04765911.5
(22) Anmeldetag: 09.10.2004
(51) Int. Cl.: B29B 17/02, B29B 17/00

(54) **PET-FLASCHEN-RECYCLING**
PET BOTTLE RECYCLING
RECYCLAGE DE BOUTEILLES EN PET

(30) Priorität: 13.10.2003 DE 10348144
(43) Veröffentlichungstag der Anmeldung: 28.06.2006
(73) Patentinhaber: KRONES AG, 93073 Neutraubling (DE)
(72) Erfinder: FRIEDLÄNDER, Thomas, 93049 Regensburg (DE); HOFFERBERT, Maren, 93049 Regensburg (DE); KIRCHHOFF, Timm, 24977 Westerholz (DE)
(86) Internationale Anmeldenummer: PCT/EP2004/011319
(87) Internationale Veröffentlichungsnummer: WO 2005/037514

(56) Entgegenhaltungen:
- EP-A- 0 492 043
- CH-A- 683 674
- US-A- 5 255 859
- US-A- 5 688 693
- PATENT ABSTRACTS OF JAPAN Bd. 2003, Nr. 12, 5. Dezember 2003 (2003-12-05) & JP 2003 291144 A (MEINO:KK), 14. Oktober 2003 (2003-10-14)

## Beschreibung

Die Erfindung betrifft ein Verfahren und eine Vorrichtung zum Wiederaufbereiten von gebrauchten PET-Flaschen.

Verfahren und Vorrichtungen zum Wiederaufbereiten von gebrauchten PET-Flaschen sind bekannt. Dabei werden im allgemeinen zunächst die Etiketten abgelöst und entfernt. Danach wird in einem weiteren Schritt eine Mühle benutzt, um die Flaschen inklusive verschlussdeckel zu Flakes zu zerkleinern. Dieses Produktgemisch wird dann in verschiedenen Waschschritten gewaschen und von vorhandenen Leimrückständen gesäubert. Danach findet eine Trennung nach verschiedenen Kunststoffarten (PET vom Flaschenkörper und Polyethylen vom Deckel) statt. In einem ggf. anschließenden Dekontaminationsschritt wird das PET dann so gereinigt, dass es wieder zur Herstellung neuer Flaschen eingesetzt werden kann.

Beispiele solcher Wiederaufbreitungsverfahren sind in der US-A 5 115 987, der US-A 5 688 693 oder auch der DE 10 002 682 A1 beschrieben.

Zudem zeigt die US 5 688 693 ein Verfahren zum Inspizieren und Behandeln von Kunststoffflaschen bzw. von zu Flakes zerkleinerten Kunststoffflaschen. Dazu befinden sich entlang einer Behandlungsstation eine Teststation für ganze Flaschen, ein Zerkleinerer, eine zweite Teststation, ein Heißwäscher sowie eine dritte Teststation. In den Teststationen findet jeweils eine Inspektion statt, so dass kontaminierte Flakes aus dem weiteren Prozess ausgeschleust werden können.

Diese bekannten Verfahren haben nun aber den folgenden Nachteil: Im Gegensatz zu Glas, bei dem sich Verunreinigungen auf der Glasoberfläche ablagern und leicht wieder entfernt werden können, diffundieren bei PET-Flaschen Verunreinigungen in das Material hinein. Ja nachdem wie dickwandig der Kunststoff ist, diffundieren die Verunreinigungen beim Dekontaminieren unterschiedlich schnell wieder aus dem

Material heraus will man nun sicherstellen, dass das zerkleinerte Kunststoffmaterial tatsächlich vollständig gereinigt ist, so müssen die wiederaufbereitungsparameter so angepasst werden, dass auch die am tiefsten verunreinigten dickwandigeren Bestandteile ausreichend dekontaminiert sind. Man hat daher im Stand der Technik die Reinigungs- bzw. wiederaufbereitungsparameter an die am schwierigsten zu reinigenden dickeren Teile angepasst. Dies ist jedoch ökonomisch nur bedingt sinnvoll, da dann für die dünneren Kunststoffflakes eine "Überreinigung" stattfindet.

Die Aufgabe der Erfindung liegt demgegenüber darin, ein Verfahren und eine Vorrichtung vorzuschlagen, mit dem PET-Flaschen ökonomischer wiederaufbereitet werden können.

Diese Aufgabe wird gemäß dem Verfahren nach Anspruch 1 und der Vorrichtung nach Anspruch 8 gelöst.

Das erfindungsgemäße Verfahren sieht vor, dass nach dem Zerkleinern der Flaschen zu Kunststoffflakes diese nach wenigstens einem Kriterium in mindestens zwei Teilmengen sortiert werden, und dass sich dann eine individuelle Wiederaufbereitungsbehandlung bzw. Verwertung jeder der Teilmengen anschließt.

Unter Kunststoffflakes will der Anspruch dabei verstehen, dass es sich um Flakes handelt, die im Wesentlichen artenrein sind bzw. alle vom Flaschenmaterial stammen, d.h., dass andere Materialien vor dem Zerkleinerungsschritt oder vor dem Sortierschritt abgetrennt und in eigenen Kreisläufen wiederverwertet oder entsorgt werden. Andere Materialien sind dabei die Etiketten oder die Kunststoffbehälterverschlüsse, wie beispielsweise Polyethylenschraubverschlüsse oder Aluminiumschraubverschlüsse. Im Schritt b werden somit im Wesentlichen artenreine Kunststoffflakes nach wenigstens einem Kriterium in mindestens zwei Teilmengen sortiert und weiterbehandelt.

In einer bevorzugten Ausführungsform können die Kunststoffflakes im Schritt (b) nach unterschiedlicher Größe und/oder unterschiedlicher Dicke und/oder unterschiedlicher Masse und/oder unterschiedlicher Dichte sortiert werden. In einer herkömmlichen PET-Flasche unterscheidet man im Wesentlichen die Kunststoffflakes, die ihren Ursprung in der Flaschenwand haben und die Kunststoffflakes, die ihren Ursprung im Flaschenkopf, also dem Abschnitt mit dickerem PET, haben. Da diese zwei Familien Kunststoffflakes unterschiedlich schwierig zu reinigen sind, sollte das Sortierkriterium dazu führen, dass man diese beiden Arten an Kunststoffflakes trennen kann. Die beiden Arten unterscheiden sich im Wesentlichen durch ihre Dicke und/oder ihre unterschiedliche Masse und/oder ihre unterschiedliche Größe, ggf. auch nach dem Kristallisationsgrad, der wiederum die Dichte beeinflusst. Demnach ist es vorteilhaft, die Kunststoffflakes nach einem oder nach einer Kombination dieser Kriterien zu sortieren. In entsprechender Weise können auch die Flakes von Multilayer-PET-Flaschen sortiert werden, da die Flakes der Barriereschicht wesentlich dünner sind als die Flakes der Innen- und Aussenwandung.

Vorteilhafterweise könnte dabei die erste Teilmenge zu mindestens etwa 95%, insbesondere zu mindestens 98%, aus Kunststoffflakes aus dickwandigen Teilen des Getränkebehälters, insbesondere des Gewindestücks, bestehen und die zweite Teilmenge zu mindestens etwa 9.5%, insbesondere zu mindestens 98 % aus Kunststoffflakes aus dünnwandigen Teilen des Getränkebehälters. Eine 100%ige Trennung der zwei Kunststoffflakearten ist zwar rein theoretisch möglich, jedoch ökonomisch wenig sinnvoll, da zeitaufwändig und somit teuer. Es hat sich gezeigt, dass es um die nötigen Sicherheitsstandards zu erreichen genügt, die Sortierung mit einer ca. 95%igen Sicherheit durchzuführen. Das heißt maximal 5% der sortierten Kunststoffflakes bestehen aus der jeweiligen anderen Kunststoffflakesart. Eine solche Trenngüte lässt sich, wie weiter unten beschrieben, technisch und ökonomisch sinnvoll realisieren, wodurch das Verfahren insgesamt effizienter und billiger wird. Günstigerweise können je nach Teilmenge die Kunststoffflakes im Verfahrensschritt (c) mit unterschiedlicher Temperatur behandelt werden. Es ist bekannt, dass bei höheren Temperaturen der Diffusionsvorgang schneller und bei niedrigeren Temperaturen langsamer stattfindet. Somit lässt sich über die Temperatur der Dekontaminationsvorgang in Abhängigkeit von der Größe bzw. Dicke der Kunststoffflakes optimieren.

Besonders vorteilhaft kann dabei die erste Teilmenge bei höherer Temperatur behandelt werden als die zweite Teilmenge. Man kann beispielsweise die Dekontaminationstemperaturen für die beiden Teilmengen so einstellen, dass die Dauer des Dekontaminationsschritts für die beiden Teilmengen im Wesentlichen gleich ist. Dadurch lässt sich für beide Teilmengen die gesamte Wiederaufbereitungsdauer angleichen, was sich günstig auf die Ausnutzung einer Wiederaufbereitungsanlage auswirkt, da der Dekontaminationsteil einer Wiederaufbereitungsanlage für beide Teilmengen gleichlang benutzt wird.

Alternativ dazu oder zusätzlich können die Kunststoffflakes je nach Teilmenge im Verfahrensschritt (c) unterschiedlich lang behandelt werden. Da die Diffusion nicht nur von der Temperatur, sondern auch von der Zeit abhängt, können auch diese Parameter variiert werden, um das Wiederaufbereitungsverfahren zu optimieren. Günstigerweise kann dabei die eine (erste) Teilmenge länger behandelt werden als die zweite Teilmenge. Da in der ersten Teilmenge die dickeren Kunststoffflakes sind, lässt sich somit erreichen, dass beide Teilmengen im Wesentlichen gleich gut dekontaminiert werden. Somit werden beide Teilmengen nach dem Wiederaufbereiten zusammengeführt und können gemeinsam wieder zu Getränkeflaschen oder Ähnlichem weiterverarbeitet werden.

In einer bevorzugten Ausführungsform kann die erste Teilmenge im Verfahrensschritt (c) in einem weiteren Zerkleinerungsschritt nachverkleinert werden. Dadurch erhält man ähnliche Kunststoffflakedicken wie in der zweiten Teilmenge, wodurch man bei der Dekontamination im Verfahrensschritt (c) die erste Teilmenge ähnlich der zweiten Teilmenge behandeln kann, ohne dass man die Kunststoffflakes der ersten Teilmenge übermäßig erwärmen muss oder übermäßig lang dekontaminieren muss.

Günstigerweise kann die erste Teilmenge und die zweite Teilmenge nach dem Nachverkleinerungsschritt der ersten Teilmenge wieder zusammengeführt und die Dekontamination im Verfahrensschritt (c) gemeinsam durchgeführt werden. Da das Nachzerkleinern so durchgeführt werden kann, dass sich die Kunststoffflakes in ihrer Dicke bzw. ihrer Größe und Masse den Kunststoffflakes der ersten Teilmenge entsprechen, lässt sich die Dekontamination in einem gemeinsamen Dekontaminationsschritt durchführen.

In besonders vorteilhafterweise kann im Sortierschritt (b) ein Luftherd benutzt werden. Luftherde eignen sich im besonderen Maße zur Sortierung der Kunststoffflakes, da sie Materialgemische mit gleicher Dichte nach der Größe bzw. nach der Dicke bzw. nach unterschiedlicher Masse sortieren können. Eine Sortierung der Kunststoffflakes lässt sich somit sicher und wiederholbar durchführen.

Die Vorrichtung zur Durchführung des Verfahrens umfasst wenigstens eine Zerkleinerungsanlage zum Zerkleinern der Kunststoffbehälter zu Kunststoffflakes, eine Sortieranlage zum Sortieren der Kunststoffflakes nach wenigstens einem Kriterium in mindestens zwei Teilmengen und eine Dekontaminationsanlage zum Dekontaminieren der Kunststoffflakes.

In einer bevorzugten Ausführungsform kann die Sortieranlage einen Luftherd umfassen. Luftherde können Materialgemische gleicher Dichte nach unterschiedlicher Dicke bzw. unterschiedlicher Größe bzw. unterschiedlicher Masse in zwei Teilmengen trennen.

Günstigerweise kann der Sortierabschnitt zusätzlich eine Siebvorrichtung umfassen. Herde arbeiten besser mit einem eingegrenzten Partikelgrößenspektrum. Daher ist es vorteilhafter, dieses Gemisch über ein Sieb laufen zu lassen, das kleine Fraktionen abzieht, bevor das Materialgemisch in den Luftherd eintritt. Der Siebüberlauf wird dann in den Luftherd gegeben. Dadurch wird die Güte der Trennung weiter verbessert.

Ausführungsbeispiele der Erfindung sind in den Zeichnungen dargestellt und werden nachstehend erläutert. Es zeigen:
- Fig. 1: ein Blockdiagramm eines ersten Ausführungsbeispiels des erfindungsgemäßen Verfahrens zum Wiederaufbereiten von gebrauchten Kunststoffbehältern, insbesondere PET-Flaschen,
- Fig. 2: ein zweites Ausführungsbeispiel für das erfindungsgemäße Verfahren zum wiederaufbereiten von gebrauchten Kunststoffbehältern, insbesondere PET- Flaschen,
- Fig. 3: eine schematische Darstellung eines Ausführungsbeispiels einer erfindungsgemäßen Vorrichtung zum Wiederaufbereiten von gebrauchten Kunststoffbehältern, insbesondere PET-Flaschen.

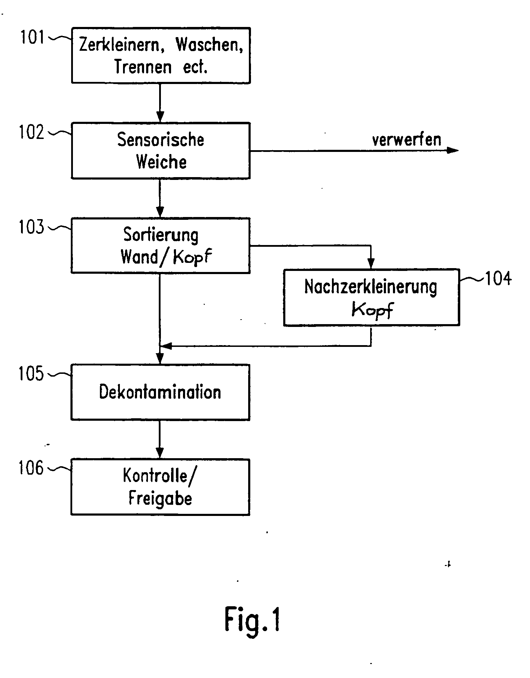

Im Blockdiagramm nach Fig. 1 sind die einzelnen Verfahrensschritte symbolisch angedeutet. Die PET-Flaschen werden zunächst, wie an sich bekannt, im Schritt 101 zerkleinert und gewaschen. Dabei findet auch eine Trennung von PET-Bestandteilen und anderen Bestandteilen statt, d.h. also Verschlusskappen, Etiketten, Leimrückstände oder eventuell vorhandene Bodenkappen, werden entfernt. Am Ende des Verfahrensschritts 101 liegen dann im Wesentlichen nur noch artenreine PET-Flakes vor.

Die PET-Flakes werden an einer sensorischen Weiche 102 vorbei geführt. Dort werden sehr stark kontaminierte Flakes aussortiert und verworfen.

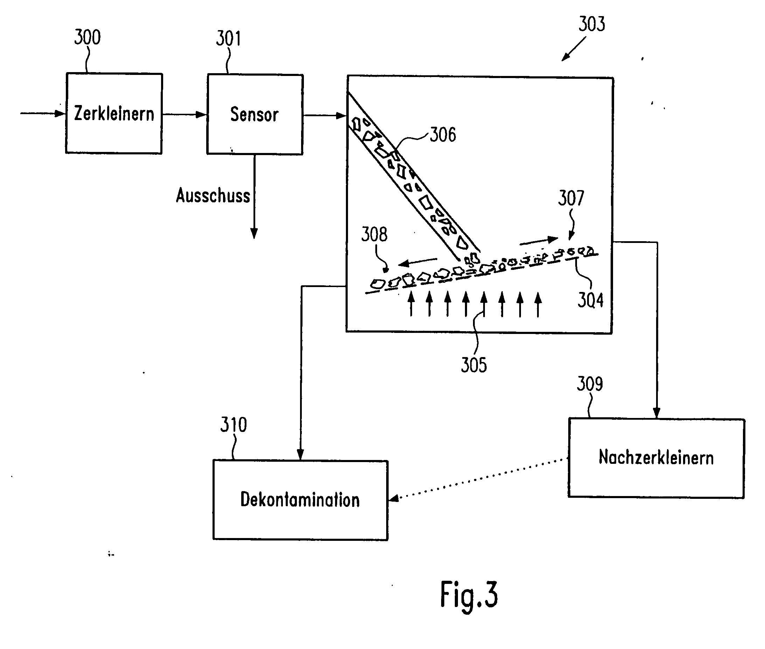

Die dann allein noch vorliegenden PET-Kunststoffflakes werden im Verfahrensschritt 103 (im Anspruch Verfahrenschritt b) sortiert. Die Sortierung kann dabei so erfolgen, dass die erste Teilmenge im Wesentlichen aus dickwandigeren Teilen bzw. Flakes gebildet wird, also insbesondere denjenigen Flakes, die vom Gewindestück bzw. Kopf der Flasche herrühren, während die zweite Teilmenge die dünnwandigen Wandteile enthält. Diese Trennung kann mit verschiedenen Hilfsmitteln durchgeführt werden. Insbesondere geeignet erscheint ein sogenannter Luftherd, der in Zusammenhang mit Fig. 3 noch weiter beschrieben werden wird.

Im Schritt 103 muss nicht unbedingt eine 100%ige Trennung der Flakes erfolgen. Reinheitsgrade von 95%, insbesondere 98%, reichen an sich bereits aus.

Bei der in Fig. 1 dargestellten Verfahrensführung wird nun im Schritt c (Anspruch 1) eine individuelle Wiederaufbereitungsbehandlung der einzelnen Teilmengen dadurch bewirkt, dass die dickwandigeren PET-Flakes im Block 104 nachzerkleinert werden. Diese Nachzerkleinerung findet bevorzugt so statt, dass die danach erhaltenen Flakestücke zusammen mit den dünnwandigen Flakes in einem gemeinsamen, Dekontaminationsschritt, der auf die dünnwandigen Kunststoffflakes abgestellt ist, dekontaminiert werden können. Dieser Schritt enthält im allgemeinen einen Waschvorgang, sowie einen Trocknungsvorgang. Es hat sich gezeigt, dass bei typischen Flakegrößen von z.B. kleiner 10 mm Durchmesser man mit vier Stunden Trocknungszeit bei ca. 170°C auskommt, um ungefähr 99% aller Verunreinigung zu entfernen. Diese Verfahrensschritte können auch örtlich getrennt beim Recycler bzw. Konverter erfolgen.

Im letzten Schritt 106 werden die Flakes nochmals kontrolliert und bei ausreichender Reinheit zur Weiterverarbeitung freigegeben. Die Kontrolle kann hier zum Beispiel mittels eines Gaschromatographen stattfinden.

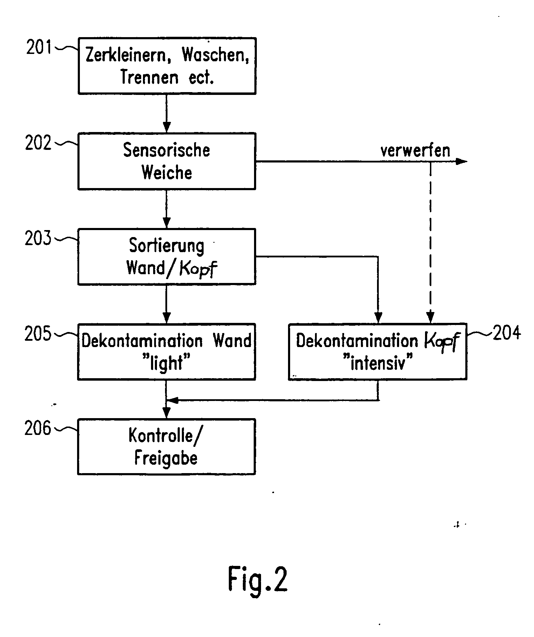

In der in Fig. 2 dargestellten Verfahrensvariante werden nach dem Zerkleinern 201 und dem Sortierschritt 203 (Schritt b im Anspruch 1) die gröberen Flakes nicht nachzerkleinert. Stattdessen findet für die beiden Teilmengen eine unterschiedliche Dekontamination 204, 205 statt. Die Halsbereiche, also die dickwandigeren PET-Flakes, werden dabei intensiver dekontaminiert, während für die dünnwandigeren Wandbereiche eine weniger intensive Dekontamination ausreicht.

Auch danach findet dann wieder die übliche Kontrolle 206 und Freigabe statt.

In Fig. 3 ist nun schematisch eine Anlage zum Durchführen der unterschiedlichen Verfahrensvarianten des erfindungsgemäßen Verfahrens dargestellt.

Eine solche Anlage enthält einen Zerkleinerer 300, der die angelieferten PET-Flaschen zerkleinert. Diese passieren dann einen Sensor 301, der stark verschmutze Teile aussortiert.

Kernstück der bei dieser Ausführungsform zur Durchführung des Verfahrensschritt b (Sortierung der artenreinen PET-Flakes). eingesetzten Sortieranlage ist ein mit 303 bezeichneter Luftherd.

Der Luftherd 303 weist eine in Längsrichtung geneigte perforierte Platte 304 auf, die in dieser Richtung mit nach oben gerichteter Fördertendenz angetrieben schwingt und von unten mit Luft 305 durchströmt wird. Die zu trennenden PET-Flakes 306 werden von oben ungefähr mittig auf die perforierte Platte 304 aufgegeben. Die durchströmende Luft fluidisiert und entmischt das Aufgabegut in auf der Platte 304 liegendes Schwergut und aufschwimmendes Leichtgut. Das Schwergut 307, in diesem Fall dickwandige PET-Flakes, bleibt in Kontakt mit der Platte 304 und wird durch die Kontaktreibung und die Schwingung der Platte nach oben gefördert. Das Leichtgut 308, d.h. die dünnwandigen PET-Flakes, bewegt sich dazu entgegengesetzt abwärts. Zur verbesserung des Sortierergebnisses kann zusätzlich (hier nicht gezeigt) das Mischgut vor dem Eintritt in den Luftherd 303 mit Hilfe eines Siebs vorsortiert werden. Dies kann vorteilhaft sein, wenn der Luftherd bei eingegrenzten Partikelgrößenspektren besser arbeitet. So kann beispielsweise ein Sieb vorgeschaltet werden, das eine Teilfraktion mit Größen kleiner 3 mm aus dem Mischgut entfernt, um später diese Fraktion der Teilmenge mit den dünnwandigen PET-Flakes wieder zuzuführen.

Die Teilmenge mit den dickwandigeren PET-Flakes kann nun entweder noch einmal nachzerkleinert werden, was im Zerkleinerer 309 geschieht, und dann, wie mit gestricheltem Pfeil angedeutet, zusammen mit den dünneren PET-Flakes in einem gemeinsamen Dekontaminationsschritt 310 dekontaminiert werden. In nicht dargestellter Weise können die gröberen Flakes, ohne nachzerkleinert zu werden, einer eigenen Dekontaminationsstufe zuführt werden.

Bei einem Versuch wurden als Ausgangsmaterial PET-Flakes benutzt, die durch Mahlen aus neuen Flaschen herstellt worden sind. Die Teilchenfraktion kleiner 3 mm wurde mit einem Sieb abgezogen. Der Rest wurde dann auf einen Luftherd gegeben und mit einem Durchsatz von 280 kg/h, einer Perforationsfläche von 600 x 1200 mm mit Öffnungen von 1,5 mm und einer Schwingfrequenz von 65 Hz betrieben. Die Neigung wurde so eingestellt, dass runde Flakes unabhängig von ihrer Größe nicht nach unten rollen können. Mit diesen Parametern wurde ein Reinheitsgrad der Fraktionen von über 99% erhalten mit der Wandstärke als Trennkriterium. Die feine Fraktion hat eine Wandstärke von weniger als einem Millimeter, die grobe Fraktion hat eine Wandstärke von mehr als einem Millimeter.

## Patentansprüche

1. Verfahren zum Wiederaufbereiten von gebrauchten PET-Flaschen, wobei das wiederaufbereitete PET zur Herstellung neuer Flaschen eingesetzt wird, mit den Schritten:
a)Zerkleinern (101, 201) der Flaschen zu Kunststoffflakes,
b) Sortieren der Kunststoffflakes (103, 104) nach wenigstens einem Kriterium in mindestens zwei Teilmengen,
c) individuelle Wiederaufbereitungsbehandlung jeder der Teilmengen, ggf. einschließlich Dekontaminationsbehandlung, und
d) Zusammenführung der mindestens zwei Teilmengen und gemeinsame Weiterverarbeitung.

2. Verfahren nach Anspruch 1, wobei die Kunststoffflakes im Schritt b) nach unterschiedlicher Größe und/oder unterschiedlicher Dicke und/oder unterschiedlicher Masse und/oder unterschiedlicher Dichte und/oder unterschiedlicher Kristallinität sortiert werden.

3. Verfahren nach Anspruch 1 oder 2, wobei so sortiert wird, dass eine erste Teilmenge zu mindestens etwa 95%, insbesondere zu mindestens 98%, aus Kunststoffflakes aus dickwandigen Teilen des Getränkebehälters, insbesondere des Flaschenkopfs, besteht, und eine zweite Teilmenge zu mindestens etwa 95%, insbesondere zu mindestens 98%, aus Kunststoffflakes aus dünnwandigen Teilen des Getränkebehälters besteht.

4. Verfahren nach einem der Ansprüche 1 bis 3, wobei die erste Teilmenge im Verfahrensschritt c) in einem weiteren Zerkleinerungsschritt (104) nächzerkleinert wird.

5. Verfahren nach Anspruch 4, wobei die erste Teilmenge und die zweite Teilmenge nach dem Nachzerkleinerungsschritt (104) der ersten Teilmenge wieder zusammengeführt werden und gemeinsam dekontaminiert werden.

6. Verfahren nach einem der Ansprüche 1 bis 5, wobei im Sortierschritt b) ein Luftherd (303) benutzt wird.

7. Verfahren nach einem der Ansprüche 1 bis 5, wobei der Sortierschritt b) eine Dichtetrennung als Funktion der Kristallinität in einem flüssigen Medium unfasst.

8. Vorrichtung zum Wiederaufbereiten von gebrauchten PET-Flaschen, mit einer Zerkleinerungsanlage (300) zum Zerkleinern der Kunststoffbehälter zu Kunststoffflakes, einer Sortieranlage (303) zum Sortieren der Kunststoffflakes nach wenigstens einem Kriterium in mindestens zwei Teilmengen, einer Dekontaminationsanlage (105, 205,310) zum Dekontaminieren zumindest eines Teils der Kunststoffflakes und einer Behandlungsanlage (104, 204, 309) zum Dekontaminieren und/oder Nachzerkleinern mindestens eines Teils der Kunststoffflakes sowie einer Zusammenführung zum Vereinigen der mindestens zwei Teilmengen.

9. Vorrichtung nach Anspruch 8, **dadurch gekennzeichnet, dass** die Sortieranlage einen Luftherd (303) umfasst.

10. Vorrichtung nach Anspruch 9, **dadurch gekennzeichnet, dass** die Sortieranlage eine Siebvorrichtung umfasst.

## Claims

1. Process for recycling used PET bottles, whereby the recycled PET is used to produce new bottles, marked by the following stages:
a) the bottles are cut up (101, 102) into plastic flakes,
b) the plastic flakes are graded (103, 104) into at least two parts,
c) separate recycling of each of the separate quantities including, where necessary, purification, and
d) mixing of the at least two part-quantities and joint, further processing.

2. Process in accordance with claim 1, whereby the plastic flakes are, in stage b), sorted according to size and/or thickness and/or mass and/or crystallinity.

3. Process in accordance with claims 1 or 2, whereby sorting occurs such that a first component part is at least approximately 95%, and more particularly at least 98% thick plastic flakes from thick parts of plastic drinks bottles, especially bottle tops, and a second component part comprises at least approximately 95%, and more particularly at least 98% of thin plastic flakes from thin parts of plastic drinks bottles.

4. Process in accordance with claims 1 to 3, whereby the first component part is, in process stage c), again crushed in a further crushing stage (104).

5. Process in accordance with claim 4, whereby the first part-quantity and the second part-quantity are brought together after the secondary crushing stage (104) of the first part-quantity, and the two quantities are decontaminated together.

6. Process in accordance with claims 1 to 5, whereby an air table (303) is used in the grading stage b).

7. Process in accordance with claims 1 to 7, whereby the grading stage b) includes density separation on the basis of crystallinity in a liquid medium.

8. Device for recycling used PET bottles with a crushing unit (300) for crushing the plastic containers into plastic flakes, a grading unit (103) for grading the plastic flakes into two part-quantities in accordance with at least one criterion, a decontamination unit (105, 205, 310) for decontaminating at least a portion of the plastic flakes, and a processing unit (104, 204, 309) for decontamination and/or crushing of at least a portion of the plastic flakes, and also conflation, bringing the at least two part-quantities together.

9. Device in accordance with claim 8, **characterized in that** the grading unit includes an air table (303).

10. Device in accordance with claim 8, **characterized in that** the grading unit includes a sieve.

## Revendications

1. Procédé de recyclage de bouteilles en PET usagées, selon lequel on utilise le polytétraétylène PET recyclé pour fabriquer de nouvelles bouteilles, le procédé comprend les étapes suivantes :
a) réduction (101,201) des bouteilles en écailles de matière plastique,
b) classement des écailles de matière plastique (103, 104) selon au moins un critère en au moins deux sous-ensembles,
c) recyclage individuel de chacun des sous-ensembles, le cas échéant avec un traitement de décontamination, et
d) réunion d'au moins des deux sous-ensembles et poursuite de leur traitement en commun.

2. Procédé selon la revendication 1,
selon lequel
les écailles de matière plastique selon l'étape b) sont classées en fonction de leurs différentes dimensions et/ou de leurs différentes épaisseurs et/ou de leurs différentes masses et/ou de leurs différentes densités et/ou de leurs différentes cristallinités.

3. Procédé selon la revendication 1 ou 2,
selon lequel
on effectue le classement pour que le premier sous-ensemble corresponde à au moins 95 % et notamment à au moins 98 % d'écailles de matière plastique provenant des parties à paroi épaisse de la bouteille notamment de la tête de la bouteille et qu'un second sous-ensemble corresponde à au moins environ 95 % et notamment à au moins 98 % d'écailles de matière plastique provenant des parties à parois minces de la bouteille.

4. Procédé selon l'une des revendications 1 à 3,
selon lequel
on réduit davantage le premier sous-ensemble de l'étape de procédé c) au cours d'une autre étape de réduction (104).

5. Procédé selon la revendication 4,
selon lequel
on réunit de nouveau les premier et second sous-ensembles après l'étape de réduction postérieure (104) du premier sous-ensemble et ils sont décontaminés conjointement.

6. Procédé selon l'une des revendications 1 à 5,
selon lequel
l'étape de classement b) utilise une table d'épuration (303).

7. Procédé selon l'une des revendications 1 à 5,
selon lequel
l'étape de classement b) utilise une séparation densitaire comme fonction de la cristallinité dans un milieu liquide.

8. Dispositif de recyclage de bouteilles en PET, usagées, à l'aide d'une installation de réduction (300) pour réduire les récipients en matière plastique en écailles de matière plastique, une installation de classement (303) pour classer les écailles de matière plastique selon au moins un critère en au moins deux sous-ensembles, une installation de décontamination (105, 205, 310) pour décontaminer au moins une partie des écailles en matière plastique et une installation de traitement (104, 204, 309) pour décontaminer et/ou réduire encore plus au moins une partie des écailles de matière plastique ainsi que pour réunir au moins les deux sous-ensembles.

9. Dispositif selon la revendication 8,
**caractérisé en ce que**
l'installation de classement comprend une table d'épuration (303).

10. Dispositif selon la revendication 9,
**caractérisé en ce que**
l'installation de classement comprend un dispositif de tamisage.
